Europäisches Patentamt

European Patent Office

Office européen des brevets

(19)

(11) Numéro de publication : **0 368 747 B1**

(12)

# FASCICULE DE BREVET EUROPEEN

(45) Date de publication du fascicule du brevet :
**19.07.95 Bulletin 95/29**

(51) Int. Cl.⁶ : **G06T 7/20**

(21) Numéro de dépôt : **89403061.8**

(22) Date de dépôt : **07.11.89**

(54) **Procédé d'estimation du mouvement d'au moins une cible dans une suite d'images, et dispositif pour la mise en oeuvre de ce procédé.**

(30) Priorité : **10.11.88 FR 8814677**

(43) Date de publication de la demande :
**16.05.90 Bulletin 90/20**

(45) Mention de la délivrance du brevet :
**19.07.95 Bulletin 95/29**

(84) Etats contractants désignés :
**CH DE GB IT LI NL SE**

(56) Documents cités :
**WO-A-87/05769**
**GB-A- 2 187 059**

(73) Titulaire : **THOMSON-CSF**
**173, Boulevard Haussmann**
**F-75008 Paris (FR)**

(72) Inventeur : **Ferre, Alain**
**THOMSON-CSF**
**SCPI**
**Cédex 67**
**F-92045 Paris la Défense (FR)**
Inventeur : **Chevance, Christophe**
**THOMSON-CSF**
**SCPI**
**Cédex 67**
**F-92045 Paris la Défense (FR)**
Inventeur : **Quignon, Jean**
**THOMSON-CSF**
**SCPI**
**Cédex 67**
**F-92045 Paris la Défense (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

EP 0 368 747 B1

**Description**

La présente invention concerne un procédé d'estimation du mouvement d'au moins une cible dans une suite d'images, le mouvement de cette cible et le mouvement du fond des images étant assimilables à des translations. L'estimation du mouvement d'une cible permet la détection et la poursuite de cette cible, en dépit du mouvement du fond des images, dû au déplacement du véhicule porteur du capteur d'images, et en dépit du déplacement de la cible par rapport au fond des images.

La détection et la poursuite d'une cible peuvent être effectuées selon deux procédés connus :
- soit la cible est modelisée et des attributs la définissant sont calculés. La détection consiste alors à chercher dans l'image une zone définie par des attributs peu différents de ceux de la cible.
- soit la cible est définie comme étant une zone de pixels en mouvement, entre une image de référence et l'image courante.

Ces deux procédés peuvent être utilisés indépendamment ou simultanément. Lorsque les attributs propres à la cible ne peuvent pas être déterminés a priori, le second procédé est mis en oeuvre. Il nécessite tout d'abord de recaler le fond de l'image courante par rapport au fond de l'image de référence. Il consiste ensuite à extraire la cible en calculant les différences de luminance entre l'image de référence et l'image courante après recalage de son fond. Les pixels qui ont une différence de luminance supérieure à une valeur de seuil fixée sont considérés comme ayant un mouvement vrai, dû à la présence d'une cible en mouvement, alors que les pixels ayant une différence de luminance inférieure à la valeur de seuil sont considérés comme ayant un mouvement dû au bruit.

En pratique, les images sont souvent très bruitées, par exemple parce qu'elles sont fournies par des capteurs d'images infrarouges. Le bruit rend délicat l'estimation du mouvement du fond, ainsi que la détection et l'estimation du mouvement d'une ou plusieurs cibles.

C.B. KUGLIN et D.C. HINES décrivent dans : IEEE 1975, International Conference on Cybernetics and Society, San Francisco 1975, un procédé d'estimation du mouvement de translation du fond dans une suite d'images, utilisant une corrélation de phase. Il consiste à échantillonner l'image courante et l'image de référence ; à calculer, pour chacune de ces deux images, une matrice de coefficients transformés par la transformation de Fourier discrète à deux dimensions ; à calculer une matrice dite de différence de phase, dont chaque coefficient est égal au produit d'un coefficient de la première matrice, par le conjugué d'un coefficient de la seconde matrice divisé par le module de ce produit ; calculer une matrice dite matrice transformée inverse de la matrice de corrélation de phase, en appliquant la transformation de Fourier inverse à la matrice de corrélation de phase ; classer selon leur module les coefficients de la matrice transformée inverse ; estimer un vecteur de translation du fond des images, à partir du rang de la ligne et du rang de la colonne où est situé le coefficient ayant le plus grand module dans la matrice transformée inverse de la matrice de corrélation de phase.

WO-A-87/05769 décrit un procédé d'estimation des vecteurs de déplacement de chaque pixel d'une image TV nécessitant une corrélation de deux images successives de façon à déterminer les vecteurs de déplacement principaux intervenant entre les deux images et nécessitant d'essayer d'affecter à chaque pixel un des vecteurs de déplacement déterminé précédemment.

Cependant le fond de l'image est fixe et aucun regroupement de pixels ou de blocs de pixels convexes permettant de définir une zone de pixels relative à un même objet n'est envisagé.

Le but de l'invention est de proposer un procédé permettant non seulement d'estimer le mouvement du fond des images, mais aussi de détecter et d'estimer le mouvement d'une ou plusieurs cibles dans ces images.

L'objet de l'invention est un procédé consistant essentiellement à utiliser les informations fournies par le module des coefficients de la matrice transformée inverse de la matrice de corrélation de phase, autres que celui ayant le plus grand module.

Selon l'invention, un procédé et un dispositif d'estimation du mouvement d'au moins une cible dans une suite d'images, le mouvement de cette cible et le mouvement du fond des images étant assimilable à des translations, sont tels qu'exposés dans les revendications 1 et 3.

L'invention sera mieux comprise et d'autres détails apparaîtront à l'aide de la description ci-dessous et des figures l'accompagnant :
- la figure 1 représente le graphe des modules des coefficients de la matrice transformée inverse d'une matrice de corrélation de phase, pour un exemple d'images ;
- les figures 2 et 3 illustrent deux étapes de la mise en oeuvre du procédé selon l'invention ;
- la figure 4 représente le schéma synoptique d'un exemple de réalisation d'un dispositif pour la mise en oeuvre du procédé selon l'invention.

Le procédé selon l'invention consiste d'abord à échantillonner chaque image de la suite d'images analysée par un capteur, et à représenter chaque échantillon par la valeur de sa luminance. Par exemple, chaque image est échantillonnée en 256 x 256 pixels, au moyen d'un capteur d'images classique. Le procédé consiste ensuite à calculer, pour chaque image, une matrice de coefficients transformés, par la transformation de Fourier discrète, à deux dimensions. Les valeurs des coefficients transformés F(u,v) sont données par la formule suivante :

$$F(u,v) = \frac{1}{N1}\frac{1}{N2} \sum_{x=0}^{N1} \sum_{y=0}^{N2} f(x,y). \; e^{-j2\pi.\left(\frac{ux}{N1} + \frac{vy}{N2}\right)} \quad (1)$$

où f(x,y) est la valeur de luminance du pixel de coordonnées (x, y) dans un repère de coordonnée oxy centré par exemple dans le coin supérieur gauche de l'image, qui est le point de démarrage de l'analyse ; où N1 et N2 sont respectivement le nombre de pixels par ligne, et le nombre de lignes considérés pour la transformation de Fourier. Dans un exemple de mise en oeuvre l'image est sous-échantillonnée avant la transformation de Fourier. Par exemple, N1=N2=128, ce qui revient à prendre un échantillon sur deux dans une ligne, en ne prenant qu'une ligne sur deux, pour permettre de faire les calculs en temps réel.

On montre que chaque coefficient transformé d'une image courante, décalée par une translation (xd,yd) par rapport à l'image de référence, est égal à :

$$FD(u,v) = \frac{1}{N1}\frac{1}{N2} \sum_{x=0}^{N1} \sum_{y=0}^{N2} f(x+xd,y+yd).e^{-j2\pi.\left[\frac{u(x+xd)}{N1} + \frac{v(y+yd)}{N2}\right]} \quad (2)$$

$$= F\left[u,v\right].e^{-j2\pi.\left[\frac{uxd}{N1} + \frac{vyd}{N2}\right]} \quad (3)$$

La translation se traduit donc, dans l'espace de Fourier, par un déphasage qui est fonction des composantes du vecteur translation. On montre aussi que ce déphasage peut être calculé par la formule suivante :

$$CP(u,v) = e^{-j2\pi.\left[\frac{uxd}{N1} + \frac{vyd}{N2}\right]} = \frac{FD(u,v). F^*(u,v)}{|FD(u,v) . F^*(u,v)|} \quad (4)$$

Il est à remarquer que le dénominateur est égal aussi à : $|FD(u,v).F*(u,v)|$ et à $|FD(u,v)|^2$.

La matrice formée des coefficients CP(u,v) est appelée matrice de corrélation de phase. Elle comporte 128x128 coefficients dans cet exemple.

Le procédé selon l'invention consiste à calculer la matrice de corrélation de phase pour l'image courante et l'image de référence, et consiste ensuite à calculer la matrice transformée inverse de la matrice de corrélation de phase, en appliquant la transformation de Fourier inverse, à deux dimensions. Puis il consiste à calculer le module de chacun des coefficients C(x,y) de cette matrice transformée inverse ; et à classer ces coefficients selon les modules décroissants.

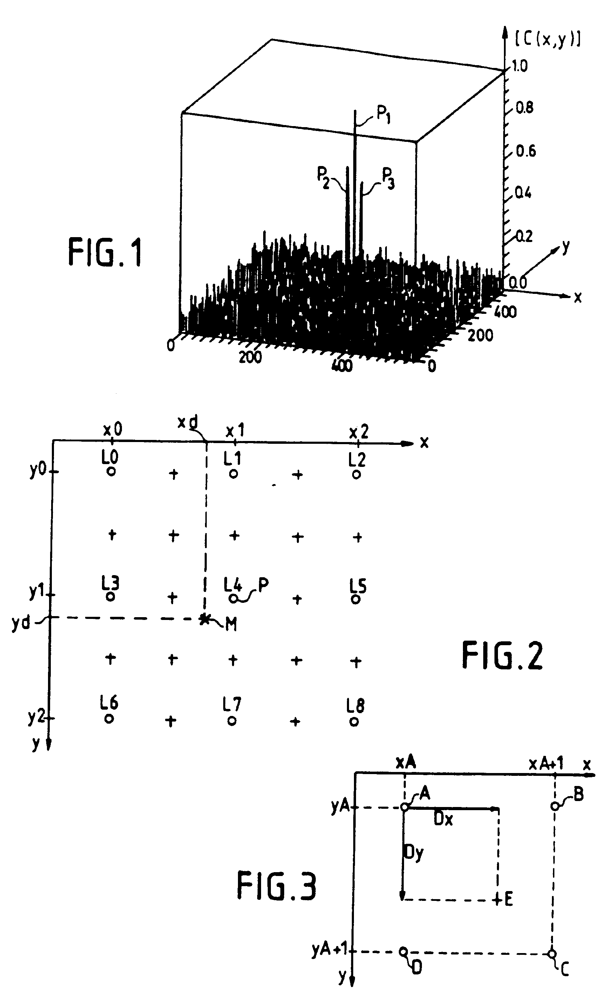

La figure 1 représente le graphe des modules des coefficients C(x,y) dans un exemple où l'image courante et l'image de référence comportent deux cibles en translation par rapport au fond. Ce graphe comporte alors trois pics P1,P2,P3 correspondant à trois coefficients dont les modules sont très supérieurs aux modules des autres coefficients. Le pic d'amplitude la plus grande, P1 correspond au déplacement du fond de l'image courante par rapport au fond de l'image de référence. Le deuxième pic par ordre de module décroissant, P2, correspond à une cible de taille importante en déplacement par rapport au fond de l'image de référence. Le troisième pic par ordre de module décroissant, P3, est plus petit que le pic P2 et correspond à une cible de taille apparente inférieure à la précédente, et en déplacement par rapport au fond de l'image de référence. Les autres pics sont de taille nettement inférieure et correspondent à du bruit.

Les coordonnées (x,y) de chacun de ces pics P1,P2,P3, permettent d'estimer un vecteur de translation.

EP 0 368 747 B1

Les coordonnées du pic P1 permettent d'estimer un vecteur de translation du fond de l'image courante par rapport au fond de l'image de référence, ce vecteur permettant un recalage du fond de l'image courante. Les coordonnées des pics P2 et P3 permettent d'estimer respectivement deux vecteurs de translation qui caractérisent le mouvement de deux cibles distinctes par rapport au fond de l'image de référence. La translation du fond entre l'image de référence et l'image courante étant connue, ces deux vecteurs de translation permettent de déterminer un vecteur vitesse absolue pour chaque cible.

La matrice des modules des coefficients $C(x,y)$ comporte 128x128 valeurs discrètes, correspondant aux sous-échantillonnage de 128x128 pixels. Ce nombre de valeurs ne permet pas d'obtenir une très grande précision dans la détermination des composantes des vecteurs translation. Le procédé consiste donc, de préférence, à interpoler pour améliorer l'estimation des vecteurs translation.

La figure 2 illustre le procédé d'interpolation utilisé pour estimer les composantes de chaque vecteur translation. Pour chaque pic P, ayant un module L4, et des coordonnées $(x1,y1)$, le procédé consiste à considérer les modules des coefficients $C(x,y)$ situés dans une fenêtre centrée sur le point de coordonnée $(x1,y1)$, cette fenêtre ayant des dimensions telles qu'elle contienne neuf coefficients. Compte tenu du sous-échantillonnage qui ne prend en compte qu'un point sur deux horizontalement et un point sur deux verticalement, les dimensions de la fenêtre sont de 5x5 pixels. Dans cette fenêtre, les valeurs de module qui sont connues sont : L0,L1,L2 sur une première ligne d'ordonnée y0 ; L3,L4,L5, sur une seconde ligne d'ordonnée y1=y0+2 ; L6,L7,L8, sur une troisième ligne d'ordonnée y2=y0+4. Les modules de valeur L0,L3,L6 sont situées à l'abscisse x0. Les modules de valeurs L1,L4,L7 sont situées à l'abscisse x1=x0+2. Les modules de valeur L2,L5,L8 sont situés à l'abscisse x2=x0+4.

Le graphe du module des coefficients $C(x,y)$ est une surface à deux dimensions qui n'est connue que par des points discrets, espacés d'une distance correspondant à un pixel. Les pics P trouvés parmi les modules des coefficients $C(x,y)$ ne correspondent donc pas exactement avec les véritables pics M du graphe. Les coordonnées $(xd,yd)$ du véritable maximum M du graphe du module sont estimés par les formules d'interpolation suivantes :

$$
\left. \begin{aligned}
xd &= \frac{1}{9} \sum_{i=0}^{8} Li \cdot xi \\
yd &= \frac{1}{9} \sum_{i=0}^{8} Li \cdot yi
\end{aligned} \right) \quad (5)
$$

Le procédé consiste ensuite à recaler le fond de l'image courante par rapport au fond de l'image de référence, en fonction du vecteur de translation estimé pour le fond de l'image courante, et correspondant au pic de module le plus grand, P1. Les composantes du vecteur de translation étant en général des valeurs non entières, le recalage du fond de l'image courante est réalisé au moyen d'un procédé d'interpolation connu, appelé procédé d'interpolation bilinéaire.

La figure 3 illustre ce procédé d'interpolation. Le pixel de l'image recalée est centré au point E dont les coordonnées sont $(xA+Dx, yA+Dy)$, Dx et Dy étant compris entre 0 et 1 pixel. Le point E est situé entre 4 points A,B,C,D qui sont les centres de pixels où la valeur de luminance est connue. Ces points ont respectivement des coordonnées $(xA,yA)$, $(xA+1,yA)$, $(xA,yA+1)$, $(xA+1,yA+1)$. La valeur de luminance interpolée au point E est alors donnée par la formule :

$$
\begin{aligned}
L(xA + Dx, yA + Dy) = \; & (1 - Dx) \cdot (1 - Dy) \cdot L(xA, yA) + \\
& Dx \cdot (1 - Dy) \cdot L(xA + 1, yA) + \\
& Dx \cdot Dy \cdot L(xA + 1, yA + 1) + \\
& (1 - Dx) \cdot Dy \cdot L(xA, yA + 1)
\end{aligned} \quad (6)
$$

Les cibles détectées par les pics P2 et P3 ne sont que des cibles possibles ; car le bruit génère des fausses alarmes. Il est nécessaire de vérifier, par d'autres moyens, que ces cibles possibles ne sont pas du bruit. D'autre part, il reste à déterminer la position de ces cibles dans l'image courante, afin de les poursuivre.

Pour valider une cible parmi toutes les zones en mouvement dans l'image courante, le procédé consiste ensuite à calculer les valeurs des différences de luminance entre l'image courante recalée et l'image de ré-

4

férence ; l'ensemble de ces valeurs étant appelé "image différence". Les différences de luminance non nulles sont dues soit à un déplacement d'une cible par rapport au fond de l'image courante ; soit au bruit qui est très important dans le cas d'une image infrarouge ; soit à des imperfections du capteur se traduisant par une réponse moyenne inégale d'une ligne à une autre.

Pour remédier à l'inégalité des réponses des capteurs d'une ligne à une autre, le procédé consiste à réaliser, avant le calcul des différences de luminance, une opération dite d'égalisation des lignes. Cette égalisation consiste à soustraire à chaque valeur de luminance d'une image, la valeur moyenne des luminances de la ligne à laquelle appartient le pixel considéré. La valeur moyenne de luminance sur chaque ligne est alors égale à zéro. Il est à noter qu'il existe d'autres procédés connus pour réaliser une égalisation des réponses fournies par les différentes lignes d'un capteur. Le procédé selon l'invention n'est pas limité au procédé d'égalisation décrit ci-dessus.

Le procédé selon l'invention consiste ensuite à réaliser une première discrimination des cibles en comparant la valeur absolue de chaque différence de luminance par rapport à une valeur de seuil fixée. Les pixels ayant une différence de luminance supérieure à la valeur de seuil sont considérés comme ayant un mouvement vrai, alors que les autres sont considérés comme étant fixes et affectés par du bruit. La valeur de seuil est fixée en fonction du taux de fausse alarme qui est tolérable.

En pratique, cette discrimination n'est pas suffisante pour éliminer la plupart des fausses alarmes dues au bruit. Une étape supplémentaire du procédé consiste à regrouper les pixels qui ont une différence de luminance supérieure à la valeur de seuil, dans des zones de pixels connexes, chaque zone étant repérée par un numéro et étant caractérisée par un vecteur d'état. Ce vecteur d'état comporte plusieurs composantes :
- le nombre de pixels constituant la zone ;
- les coordonnées du barycentre de ces pixels ;
- la valeur absolue moyenne des différences de luminance dans la zone ;
- les coordonnées maximales des pixels de la zone, ces coordonnées permettant de définir un cadre entourant la cible éventuelle.

L'attribution des pixels, au fur et à mesure d'un balayage de l'image différence, conduit à créer de nouvelles zones, ou à étendre des zones existantes, ou à fusionner une zone avec une autre qui s'avère être connexe. Chacune de ces opérations sur les zones conduit à faire une actualisation des composantes des vecteurs d'état des zones. Par exemple, lorsqu'un pixel ayant une différence de luminance supérieure à la valeur de seuil est connexe à deux zones déjà rencontrées, il est attribué à une zone résultant de la fusion de ces deux zones. Le vecteur d'état de la zone résultante est déterminé en fonction des vecteurs d'état des deux zones qui sont fusionnées. L'attribution des pixels à des zones peut être faite selon différents procédés récursifs. Un procédé connu est décrit dans la demande de brevet français N° 2 599 205.

Une deuxième étape de la discrimination des cibles peut consister à déclarer qu'une zone est une cible, et non pas du bruit, si le nombre de pixels constituant cette zone est supérieur à une seconde valeur de seuil fixée. Mais cette discrimination ne doit pas empêcher la détection des cibles qui sont à la limite de la visibilité.

Une troisième étape de discrimination de cible peut consister à estimer un vecteur vitesse pour chacune des zones de pixels en mouvement, par un procédé connu, puis à comparer le module du vecteur de vitesse ainsi estimé, avec le module du vecteur de vitesse calculé à partir du vecteur de translation correspondant à chacun des pics détectés dans la matrice transformée inverse de la matrice de corrélation de phase. La coïncidence entre le module du vecteur de vitesse d'une zone, ou de plusieurs zones disjointes, avec le module du vecteur vitesse correspondant à l'un des pics détectés précédemment, à l'exception du pic correspondant au fond d'image, permet de conclure à l'existence d'une cible ayant cette vitesse.

L'estimation du vecteur vitesse de chaque zone peut être réalisé selon un procédé connu, décrit dans la demande de brevet GB 2.134.344.

Il arrive parfois qu'une cible se traduise par plusieurs zones disjointes, mais ayant la même vitesse. C'est le cas, par exemple, d'une cible comportant plusieurs points chauds et qui est observée au moyen d'un capteur d'images infrarouges. Dans un tel cas, ce procédé a pour avantage d'identifier la pluralité de zones en mouvement comme étant une cible unique, alors qu'une discrimination n'utilisant que la comparaison de la différence de luminance par rapport à un seuil ne permet pas de savoir que cette pluralité de zones appartient à une même cible, puisque l'image différence ne montre rien dans l'espace entre ces différentes zones, dès lors que toutes les différences de luminance les plus faibles ont été éliminées après comparaison avec la valeur de seuil.

Pour améliorer encore la discrimination des cibles par rapport au bruit, il est avantageux de tester la continuité temporelle du déplacement d'une cible dans la suite d'images. Une cible est alors validée si la distance qu'elle parcourt entre une image de référence et une image courante est inférieure à un déplacement maximal calculé en fonction d'une valeur de vitesse déduite d'un pic détecté, et en fonction du temps séparant les deux images. Ce procédé peut être perfectionné en ne validant une cible que si la continuité temporelle est observée pendant un nombre d'images successives, supérieur à une valeur fixée. Le comptage des observations est remis à zéro chaque fois que la cible n'est pas retrouvée dans une image.

La suite d'images analysée par le capteur donne lieu au calcul d'une suite de matrices transformées inverses de la matrice de corrélation de phase. Dans cette suite de matrices, le pic de cible se retrouve aussi avec une remarquable continuité temporelle qui permet aussi de discriminer le pic des cibles par rapport aux pics parasites, en ne validant un pic de cible que si la continuité temporelle de ses coordonnées est observée pendant un nombre d'images supérieur à une valeur fixée.

Le procédé selon l'invention peut être mis en oeuvre en temps réel, en particulier si chaque image est sous-échantillonnée à des dimensions de 128x128 pixels, pour rendre les calculs plus rapides.

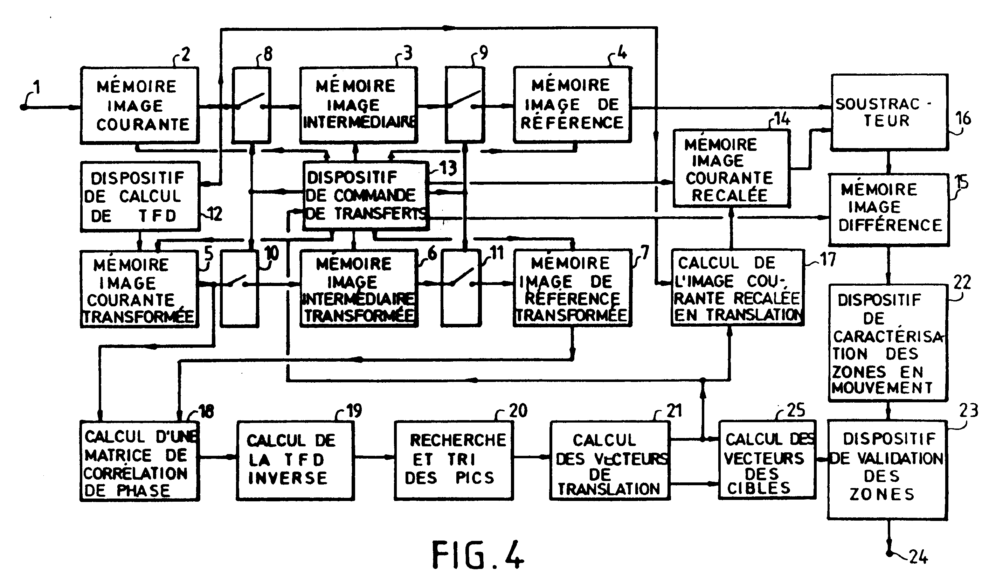

La figure 4 représente le schéma synoptique d'un exemple de réalisation d'un dispositif pour la mise en oeuvre de ce procédé. Cet exemple de réalisation comporte : une borne d'entrée 1 recevant une suite de valeurs de luminance fournie par un capteur d'images, un échantillonneur, et un dispositif d'égalisation des lignes, non représentés sur la figure ; des mémoires d'images 2,3,4 pour stocker respectivement une image courante, une image intermédiaire, et une image de référence ; des mémoires 5,6 et 7 pour stocker respectivement les coefficients transformés de l'image courante, de l'image intermédiaire, et de l'image de référence, transformées par la transformation de Fourier discrète, à deux dimensions ; des dispositifs de commutation 8,9,10,11 ; un dispositif 12 de calcul de transformation de Fourier discrète à deux dimensions ; un dispositif 13 de commande de transferts ; une mémoire d'images 14 pour stocker l'image courante recalée ; une mémoire d'images 15 pour stocker une image différence ; un soustracteur 16 ; un dispositif 17 de calcul de l'image courante recalée en translation ; un dispositif 18 de calcul d'une matrice de corrélation de phase ; un dispositif 19 de calcul de la transformation de Fourier discrète inverse, à deux dimensions ; un dispositif 20 de recherche et de tri des pics de corrélation ; un dispositif 21 de calcul des vecteurs de translation ; un dispositif 22 de caractérisation des zones en mouvement ; un dispositif 23 de validation des zones ; un dispositif 25 de calcul des vecteurs vitesses des cibles et une borne de sortie 24 fournissant des données caractérisant les cibles validées.

Le dispositif 13 de commande de transferts possède : une sortie reliée à une entrée de commande des dispositifs de commutation 8 et 10 ; une sortie reliée à une entrée de commande des dispositifs de commutation 9 et 11 ; et des sorties reliées respectivement à des entrées de commande de lecture et d'écriture, des mémoires 2 à 7, et des mémoires 14 et 15. Les mémoires 2 et 5 sont commandées parallèles simultanément. Les mémoires 3 et 6 sont commandées en parallèle simultanément. Les mémoires 4 et 7 sont commandées en parallèle simultanément.

La borne d'entrée 1 est reliée à une entrée de données de la mémoire 2. Une sortie de données de la mémoire 2 est reliée à une première entrée du dispositif 17 à une entrée du dispositif 12, et à une entrée du dispositif de commutation 8. Une sortie du dispositif 8 est reliée à une entrée de données de la mémoire 3. Une sortie de données de la mémoire 3 est reliée à une entrée de données de la mémoire 4 par l'intermédiaire du dispositif de commutation 9. Une sortie de données de la mémoire 4 est reliée à une première entrée du soustracteur 16. Une sortie du dispositif 12 est reliée à une entrée de données de la mémoire 5, pour lui fournir les valeurs des coefficients transformés de l'image courante.

Le dispositif 12 calcule les transformées de Fourier discrètes, à deux dimensions, des valeurs de luminance de l'image courante, sous-échantillonnée à 256x256 pixels. Il met en oeuvre un algorithme classique tel que l'algorithme de FORMAN. Une sortie de données de la mémoire 5 est reliée à une entrée de données de la mémoire 6 par l'intermédiaire du dispositif de commutation 10. Une sortie de données de la mémoire 6 est reliée à une entrée de données de la mémoire 7 par l'intermédiaire du dispositif de commutation 11.

Le dispositif 13 possède une entrée reliée à une sortie du dispositif 21 pour recevoir la valeur des composantes du vecteur de translation du fond de l'image courante par rapport au fond de l'image de référence. Lorsque la valeur absolue de l'une des composantes de ce vecteur de ce vecteur est supérieure à 10, le dispositif 13 commande le dispositif de commutation 9 et les mémoires 3 et 4 pour transférer les valeurs de luminance de l'image intermédiaire, stockées dans la mémoire 2, vers la mémoire 4 ; pour constituer une nouvelle image de référence. Simultanément le dispositif 13 commande le dispositif de commutation 11 et les mémoires 6 et 7 pour transférer les coefficients transformés de l'image intermédiaire, stockés dans la mémoire 6, vers la mémoire 7 ; pour qu'ils constituent les coefficients transformés d'une nouvelle image de référence.

Lorsque la valeur absolue de l'une des composantes du vecteur de translation du fond de l'image courante par rapport au fond de l'image de référence, est supérieure ou égale à 5 pixels, le dispositif 13 commande le dispositif de commutation 8 et les mémoires 2 et 3 pour transférer les valeurs de luminance de l'image courante, stockées dans la mémoire 2, vers la mémoire 3 ; pour constituer les valeurs de luminance d'une nouvelle image intermédiaire. Simultanément le dispositif 13 commande le dispositif de commutation 10 et les mémoires 5 et 6 pour transférer les coefficients transformés correspondant à l'image courante, stockés dans la mémoire 5, vers la mémoire 6 ; pour constituer les coefficients transformés d'une image intermédiaire.

Lorsque les composantes du vecteur translation du fond de l'image courante par rapport au fond de l'image de référence ne remplissent aucune de ces deux conditions, le dispositif 13 ne fait aucun transfert dans les mémoires 3 et 4, ni dans les mémoires 6 et 7. Par contre, il continue à assurer le stockage des valeurs de luminance dans la mémoire 2 pour renouveler l'image courante ; et le stockage, dans la mémoire 5, des coefficients transformés correspondant à chaque nouvelle image courante.

Le dispositif de calcul 18 possède une première entrée reliée à la sortie de données de la mémoire 5 ; une seconde entrée reliée à la sortie de données de la mémoire 7 ; et une sortie reliée à une entrée du dispositif de calcul 19. Une sortie de ce dernier est reliée à une entrée du dispositif 20. Le dispositif 21 possède : une entrée reliée à une sortie du dispositif 20 ; une première sortie reliée à une première entrée du dispositif 25, et une seconde sortie reliée à une entrée du dispositif 13, à une seconde entrée du dispositif 17, et à une seconde entrée du dispositif 25. Une sortie du dispositif 17 est reliée à une entrée de données de la mémoire 14. Une sortie de données de la mémoire 14 est reliée à une seconde entrée du soustracteur 16. Une entrée de commande de lecture-écriture de la mémoire 14 est reliée à une sortie du dispositif 13.

La mémoire 15 possède : une entrée de données reliée à une sortie du soustracteur 16 ; une entrée de commande reliée à une sortie du dispositif 13 ; et une sortie reliée à une entrée du dispositif 22. La dispositif 23 possède : une première entrée reliée à une sortie du dispositif 22 ; une seconde entrée reliée à une sortie du dispositif 25 ; et une sortie reliée à la borne de sortie 24.

Le dispositif de calcul 18 calcule chaque coefficient de la matrice de corrélation de phase conformément à la formule (4) mentionnée précédemment. Le dispositif 19 calcule la transformée de Fourier inverse discrète, à deux dimensions, de la matrice de corrélation de phase selon un algorithme classique tel que l'algorithme de Forman.

Le dispositif de calcul 20 calcule le module de chacun des coefficients de la matrice de transformation inverse de la matrice de corrélation de phase ; le compare à une valeur de seuil qui est fixée au-dessus du niveau du bruit de façon à détecter les coefficients correspondant à la translation d'une cible ; et recherche, parmi ces coefficients, celui ayant le plus grand module Ce dernier correspond à la translation du fond de l'image courante par rapport à l'image de référence. Le dispositif de calcul 21 détermine par une interpolation , conformément à la formule (5), les coordonnées précises des pics de corrélation. Ces coordonnées constituent respectivement les composantes d'un vecteur de translation pour le fond d'image et un vecteur de translation pour chacune des cibles.

La seconde sortie du dispositif 21 fournit les composantes d'un vecteur de translation du fond, d'une part au dispositif 13 de commande des transferts, et, d'autre part, au dispositif de calcul 17, pour calculer les valeurs de luminance de l'image courante recalée en translation. Le dispositif 17 calcule ces valeurs de luminance conformément à la formule (6), en fonction des valeurs de luminance de l'image courante lues dans la mémoire 2 sous la commande du dispositif 13. Les valeurs de luminance de l'image courante recalée sont stockées dans la mémoire 14, sous la commande du dispositif 13. Par ailleurs, la seconde sortie du dispositif 21 fournit les composantes du vecteur de translation du fond à la seconde entrée du dispositif 25, alors que la première sortie du dispositif 21 fournit les composantes des vecteurs translation des cibles à la première entrée du dispositif 25. Ces composantes sont définies par rapport à un repère lié à l'image de référence. Le dispositif de calcul 25 calcule la différence entre chaque vecteur de translation d'une cible et le vecteur de translation du fond d'images, pour obtenir un vecteur de translation défini dans un repère absolu. Puis il calcule un vecteur vitesse pour chaque cible en divisant son vecteur translation par la durée séparant l'image courante et l'image de référence.

Le soustracteur 16 calcule les valeurs absolues des différences de luminance entre l'image courante recalée et l'image de référence. Puis ces valeurs de différences sont stockées dans la mémoire d'image différence, 15, sous la commande du dispositif 13. Le dispositif 22 de caractérisation des zones en mouvement compare les valeurs de différence de luminance par rapport à une valeur de seuil prédéterminée. Chaque pixel pour lequel la valeur absolue de la différence de luminance est supérieure à la valeur de seuil est considéré comme étant en mouvement vrai. Les autres pixels sont soit fixes, soit affectés par le bruit. Le dispositif 22 attribue chaque pixel en mouvement, à une zone constituée de pixels qui sont en mouvement et qui sont connexes. Chaque zone qui possède un nombre de pixels supérieur à une valeur de seuil fixée, est susceptible de représenter une cible.

Pour chaque zone qui est susceptible de représenter une cible, le dispositif 22 calcule un vecteur vitesse à partir de la translation du barycentre de cette zone, d'une première à une deuxième image différence, la première image différence étant une image différence calculée précédemment pour une précédente image de référence et une précédente image courante, cette première image différence étant gardée en mémoire dans le dispositif 22. La deuxième image différence est constituée par l'image différence stockée dans la mémoire 15. Pour chaque zone susceptible d'être une cible, le dispositif 22 fournit au dispositif 23 de validation des zones, d'une part, un numéro de zone permettant de retrouver les caractéristiques de cette zone dans une mémoire de vecteur d'état à l'intérieur du dispositif 22 ; et, d'autre part, il lui fournit les composantes d'un vecteur vitesse, estimées pour cette zone à partir de la translation de cette zone de la première à la deuxième image différence.

Le dispositif 23 reçoit en outre, sur sa seconde entrée, les composantes des vecteurs de vitesse des cibles, calculés par le dispositif 25. Le dispositif 23 recherche la coïncidence entre le module du vecteur vitesse de chaque zone et chacun des modules des vecteurs vitesse de cible. Pour cela, il compare respectivement le module du vecteur vitesse d'une zone avec le module du vecteur vitesse de chaque cible, en ayant une marge de tolérance prédéterminée. Lorsque le dispositif 23 détecte une coïncidence, il conclut que la zone considérée appartient à la cible ayant la vitesse considérée. Il fournit à la borne de sortie 24 une information constituée par le numéro de la zone validée, ou les numéros des zones validées, avec les composantes du vecteur vitesse correspondant à cette zone, ou à ces zones.

Ce numéro peut être utilisé, dans un autre dispositif de traitement d'images, pour trier dans l'image courante les zones qui appartiennent à une cible donnée, et les entourer d'un cadre, en vue de les visualiser sur un écran, et pour éliminer les zones qui n'appartiennent à aucune cible et qui sont probablement dues au bruit.

Le dispositif 22 de caractérisation des zones en mouvement peut être réalisé conformément à l'enseignement de la demande de brevet GB N°2 134 344. Les dispositifs de calcul de transformation de Fourier, 12 et 19, peuvent être des circuits intégrés spécialisés, disponibles dans le commerce, tels que celui commercialisé par ZORAN, du type VFP325. Les autres dispositifs de mémoire ou dispositifs de calcul sont de réalisation suffisamment classique pour être à la portée de l'homme de l'art.

L'invention est applicable notamment à la détection multi-cible dans des images infrarouges, visibles, ou radars, quand les déplacements sont assimilables à des translations.

## Revendications

1. Procédé d'estimation du mouvement d'au moins une cible dans une suite d'images, le mouvement de cette cible et le mouvement du fond des images, étant assimilables à des translations, consistant à :
   - échantillonner chaque image puis représenter chaque échantillon par la valeur de sa luminance ;
   - calculer, pour chaque image, une matrice de coefficients transformés, par la transformation de Fourier discrète, à deux dimensions ;
   - calculer une matrice dite de corrélation de phase, dont chaque coefficient est égal au produit d'un coefficient transformé d'une première image, par le conjugué d'un coefficient transformé homologue, d'une deuxième image, divisé par le carré du module de ce produit ;
   - calculer une matrice, dite matrice transformée inverse de la matrice de corrélation de phase, en appliquant la transformation de Fourier inverse, à la matrice de corrélation de phase ;
   - comparer, par rapport à une valeur de seuil prédéterminée, les modules des coefficients de la matrice transformée inverse de la matrice de corrélation de phase et rechercher celui ayant le plus grand module (P1), ce dernier coefficient correspondant à une translation du fond d'image, alors que les autres coefficients ayant un module (P2,P3) supérieur à la valeur de seuil correspondent à des cibles possibles ;
   - puis estimer un vecteur de translation pour chaque cible possible et un vecteur de translation du fond d'image, dans un repère lié à la première image, à partir du rang (x) de la ligne et du rang (y) de la colonne où est situé le coefficient correspondant respectivement à chaque cible et au fond d'image, dans la matrice transformée inverse de la matrice de corrélation de phase ;
   
   caractérisé en ce que pour déterminer des zones de pixels correspondant à chaque cible et leur associer un vecteur vitesse, il consiste en outre à :
   - recaler le fond de la première image par rapport au fond de la deuxième image, en fonction du vecteur de translation estimé pour le fond ;
   - calculer les valeurs absolues des différences de luminance entre la première image, dont le fond a été recalé, et la deuxième image, ces valeurs de différences de luminance constituant une image dite image différence ;
   - comparer les valeurs absolues des différences de luminance par rapport à une valeur de seuil prédéterminée ; chaque pixel ayant, en valeur absolue, une différence de luminance supérieure à la valeur de seuil, étant considéré comme étant un pixel en mouvement ;
   - attribuer chaque pixel en mouvement à une zone constituée de pixels qui sont en mouvement et qui sont connexes ;
   - calculer un vecteur vitesse pour chaque zone, en calculant un vecteur de translation de cette zone, d'une première à une deuxième image différence ;

- calculer un vecteur vitesse pour chaque cible, en fonction du vecteur translation estimé pour cette cible et en fonction du vecteur de translation estimé pour le fond d'image.
- conclure qu'une zone appartient à une cible lorsque son vecteur vitesse coïncide avec le vecteur vitesse d'une cible.

2. Procédé selon la revendication 1, caractérisé en ce que, pour éliminer les fausses détections de cible, il consiste en outre à vérifier que le module du vecteur vitesse de chaque zone est inférieure à une valeur de seuil fixée, pendant une durée correspondant à nombre fixé d'images.

3. Dispositif d'estimation du mouvement d'au moins une cible dans une suite d'images, pour la mise en oeuvre du procédé selon la revendication 1, comportant :
- des moyens pour échantillonner chaque image et représenter chaque échantillon par la valeur de sa luminance ;
- des moyens (2,12) pour calculer, pour chaque image, une matrice de coefficients transformés par la transformation de Fourier discrète, à deux dimensions ;
- des moyens (18) pour calculer une matrice dite de corrélation de phase, dont chaque coefficient est égal au produit d'un coefficient transformé d'une première image, par le conjugué d'un coefficient transformé homologue, d'une deuxième image, divisé par le carré du module de ce produit ;
- des moyens (19) pour calculer une matrice, dite matrice transformée inverse de la matrice de corrélation de phase, en appliquant la transformation de Fourier inverse, à la matrice de corrélation de phase ;
- des moyens (20) pour comparer, à une valeur de seuil prédéterminée, les modules des coefficients de la matrice transformée inverse de la matrice de corrélation de phase, et pour rechercher celui ayant le plus grand module ; ce dernier coefficient correspondant à une translation du fond d'image, alors que les autres coefficients ayant un module supérieur à la valeur de seuil, correspondent à des cibles possibles ;
- des moyens (21) pour estimer un vecteur de translation pour chaque cible possible et un vecteur de translation pour le fond d'images, dans un repère lié à la première image à partir du rang (x) de la ligne et du rang (y) de la colonne où est situé le coefficient correspondant respectivement à chaque cible possible et au fond d'images, dans la matrice transformée inverse de la matrice de corrélation de phase.

ledit dispositif étant caractérisé en ce que, pour déterminer des zones de pixels correspondant à chaque cible et leur associer un vecteur vitesse, il comprend en outre :
- des moyens (14,17) pour recaler le fond de la première image par rapport au fond de la deuxième image, en fonction du vecteur de translation estimé pour le fond ;
- des moyens (15,16) pour calculer les valeurs absolues des différences de luminance entre la première image, dont le fond a été recalé, et la deuxième image ; ces valeurs de différences constituant une image dite image différence ;
- des moyens (22) pour : comparer les valeurs absolues des différences de luminance par rapport à une valeur de seuil prédéterminée ; chaque pixel qui a, en valeur absolue, une différence de luminance supérieure à la valeur de seuil, étant considéré comme étant en mouvement ; attribuer chaque pixel en mouvement à une zone constituée de pixels en mouvement et qui sont connexes, chaque zone étant susceptible de représenter une cible ;
- des moyens (23) pour valider chaque zone qui appartient réellement à une cible, en :
-- calculant un vecteur vitesse de cette zone, en estimant un vecteur de translation de cette zone, d'une première à une deuxième image différence ;
-- calculant le module du vecteur vitesse pour chaque cible possible, à partir du vecteur de translation de cette cible possible et du vecteur de translation du fond, estimés à partir de la matrice transformée inverse ;
-- concluant qu'une zone appartient réellement à une cible si le module du vecteur vitesse estimé pour cette zone coïncide avec le module du vecteur vitesse estimé pour une cible possible.


**Patentansprüche**

1. Verfahren zur Abschätzung der Bewegung mindestens eines Ziels in einer Bildfolge, wobei die Bewegung dieses Ziels und die des Bilduntergrunds translatorischen Verschiebungen angenähert werden können und das Verfahren darin besteht:

- jedes Bild zu tasten und dann jede Tastprobe durch den Wert ihrer Helligkeit darzustellen,
- für jedes Bild eine Matrix von durch die diskrete zweidimensionale Fourier-Transformation transformierten Koeffizienten zu berechnen,
- eine sogenannte Phasenkorrelationsmatrix zu berechnen, in der jeder Koeffizient dem Produkt eines transformierten Koeffizienten eines ersten Bilds mit dem Konjugierten eines entsprechenden transformierten Koeffizienten eines zweiten Bildes geteilt durch das Quadrat des Absolutwerts dieses Produkts gleicht,
- eine sogenannte inverse transformierte Matrix bezüglich der Phasenkorrelationsmatrix zu berechnen, indem die inverse Fourier-Transformation auf die Phasenkorrelationsmatrix angewendet wird,
- die Absolutwerte der Koeffizienten der inversen transformierten Matrix bezüglich der Phasenkorrelationsmatrix mit einem festen Schwellwert zu vergleichen und den Koeffizienten mit dem größten Absolutwert (P1) zu suchen, der einer Translationsverschiebung des Bilduntergrunds entspricht, während die anderen Koeffizienten mit einem Absolutwert (P2, P3) oberhalb des Schwellwerts möglichen Zielen entsprechen,
- dann einen Translationsvektor für jedes mögliche Ziel und einen Translationsvektor für den Bilduntergrund in einem mit dem ersten Bild verknüpften Koordinatensystem ausgehend vom Rang (x) der Zeile und dem Rang (y) der Spalte abzuschätzen, in der sich der Koeffizient entsprechend jedem Ziel bzw. dem Bilduntergrund in der inversen transformierten Matrix bezüglich der Phasenkorrelationsmatrix befindet, dadurch gekennzeichnet, daß zur Bestimmung der Zonen von Bildpunkten entsprechend jedem Ziel und zur Zuordnung eines Vektors zu diesen Zonen das Verfahren weiter darin besteht,
- den Untergrund des ersten Bildes bezüglich des Untergrunds des zweiten Bilds abhängig vom für den Untergrund abgeschätzten Translationsvektor zurechtzurücken,
- die Absolutwerte der Helligkeitsunterschiede zwischen dem ersten Bild, dessen Hintergrund zurechtgerückt wurde, und dem zweiten Bild zu berechnen, wobei diese Werte von Helligkeitsunterschieden ein sogenanntes Unterschiedsbild darstellen,
- die Absolutwerte der Helligkeitsunterschiede mit einem vorgegebenen Schwellwert zu vergleichen, wobei jeder Bildpunkt mit einem Absolutwert der Helligkeitsunterschiede oberhalb des Schwellwerts als ein in Bewegung befindlicher Bildpunkt betrachtet wird,
- jeden bewegten Bildpunkt einer aus bewegten und zusammenhängenden Bildpunkten bestehenden Zone zuzuordnen,
- einen Geschwindigkeitsvektor für jede Zone zu berechnen, indem ein Translationsvektor dieser Zone zwischen einem ersten und einem zweiten Unterschiedsbild berechnet wird,
- einen Geschwindigkeitsvektor für jedes Ziel abhängig vom geschätzten Translationsvektor für dieses Ziel und abhängig vom geschätzten Translationsvektor für den Bilduntergrund zu berechnen,
- daraus zu schließen, daß eine Zone zu einem Ziel gehört, wenn ihr Geschwindigkeitsvektor mit dem Geschwindigkeitsvektor eines Ziels koinzidiert.

2. Verfahren nach Anspruch 1, dadurch gekennzeichnet, daß zur Eliminierung von fehlerhaft erfaßten Zielen das Verfahren weiter darin besteht, zu überprüfen, ob der Absolutwert des Geschwindigkeitsvektors jeder Zone unter einem festen Schwellwert während einer Dauer entsprechend einer festgelegten Anzahl von Bildern bleibt.

3. Vorrichtung zur Abschätzung der Bewegung mindestens eines Ziels in einer Bildfolge für die Durchführung des Verfahrens nach Anspruch 1,
- mit Mitteln, um jedes Bild zu tasten und jede Tastprobe durch den Wert ihrer Helligkeit darzustellen,
- mit Mitteln (2, 12), um für jedes Bild eine Matrix von durch die diskrete zweidimensionale Fourier-Transformation transformierten Koeffizienten zu berechnen,
- mit Mitteln (18), um eine sogenannte Phasenkorrelationsmatrix zu berechnen, bei der jeder Koeffizient dem Produkt eines transformierten Koeffizienten eines ersten Bilds mit dem konjugierten Wert eines entsprechenden transformierten Koeffizienten eines zweiten Bilds geteilt durch das Quadrat des Absolutwerts dieses Produkts gleicht,
- mit Mitteln (19), um eine sogenannte inverse transformierte Matrix bezüglich der Phasenkorrelationsmatrix zu berechnen, indem die inverse Fourier-Transformation auf die Phasenkorrelationsmatrix angewandt wird,
- mit Mitteln (20), um die Absolutwerte der Koeffizienten der inversen transformierten Matrix bezüglich der Phasenkorrelationsmatrix mit einem vorgegebenen Schwellwert zu vergleichen und um den Koeffizienten mit dem größten Absolutwert zu suchen, der einer translatorischen Verschiebung des Bilduntergrunds entspricht, während die anderen Koeffizienten mit einem Absolutwert oberhalb des Schwellwerts möglichen Zielen entsprechen,

- mit Mitteln (21), um in der inversen transformierten Matrix bezüglich der Phasenkorrelationsmatrix einen Translationsvektor für jedes mögliche Ziel und einen Translationsvektor für den Bilduntergrund in einem mit dem ersten Bild verknüpften Bezugssystem ausgehend vom Rang (x) der Zeile und dem Rang (y) der Spalte abzuschätzen, in der der Koeffizient entsprechend jedem möglichen Ziel bzw. dem Bilduntergrund liegt,
- dadurch gekennzeichnet, daß zur Bestimmung der Zonen von Bildpunkten entsprechend jedem Ziel und zur Zuordnung eines Geschwindigkeitsvektors die Vorrichtung weiter aufweist:
- Mittel (14, 17), um den Untergrund des ersten Bilds bezüglich des Untergrunds des zweiten Bilds abhängig vom für den Untergrund abgeschätzten Translationsvektor zurechtzurücken,
- Mittel (15, 16), um die Absolutwerte der Helligkeitsunterschiede zwischen dem ersten Bild, dessen Untergrund zurechtgerückt wurde, und dem zweiten Bild zu berechnen, wobei diese Werte der Helligkeitsunterschiede ein sogenanntes Unterschiedsbild darstellen,
- Mittel (22), um die Absolutwerte der Helligkeitsunterschiede mit einem vorgegebenen Schwellwert zu vergleichen, wobei jeder Bildpunkt, der absolut gesehen einen Helligkeitsunterschied größer als der Schwellwert besitzt, als in Bewegung befindlich betrachtet wird, und um jeden in Bewegung befindlichen Bildpunkt einer Zone aus bewegten und zusammenhängenden Bildpunkten zuzuordnen, wobei jede Zone ein Ziel darstellen kann,
- Mittel (23), um jede Zone zu bestätigen, die wirklich einem Ziel angehört, wobei
  -- ein Geschwindigkeitsvektor dieser Zone berechnet wird, indem ein Translationsvektor dieser Zone von einem ersten zu einem zweiten Unterschiedsbild geschätzt wird,
  -- der Geschwindigkeitsvektor für jedes mögliche Ziel ausgehend vom Translationsvektor dieses möglichen Ziels und dem Translationsvektor des Untergrunds berechnet wird, der ausgehend von der inversen transformierten Matrix geschätzt wird,
  -- geschlossen wird, daß eine Zone tatsächlich zu einem Ziel gehört, wenn der Absolutwert des für diese Zone geschätzten Geschwindigkeitsvektors mit dem Absolutwert des für ein mögliches Ziel geschätzten Geschwindigkeitsvektors übereinstimmt.

## Claims

1. Process for estimating the motion of at least one target within a string of images, the motion of this target and the motion of the background of the images, which may be likened to translations, consisting in:
   - sampling each image and then representing each sample by the value of its luminance;
   - calculating, for each image, a matrix of transformed coefficients through two-dimensional discrete Fourier transformation;
   - calculating a so-called phase correlation matrix, each coefficient of which is equal to the product of a transformed coefficient of a first image times the conjugate of a counterpart transformed coefficient of a second image, divided by the square of the modulus of this product;
   - calculating a matrix, termed the inverse transformed matrix of the phase correlation matrix, by applying the inverse Fourier transformation to the phase correlation matrix;
   - comparing, with respect to a predetermined threshold value, the moduli of the coefficients of the inverse transformed matrix of the phase correlation matrix and searching for the one having the largest modulus (P1), the latter coefficient corresponding to a translation of the image background, whereas the other coefficients having a modulus (P2, P3) greater than the threshold value correspond to possible targets;
   - then estimating a translation vector for each possible target and a translation vector of the image background, in a frame of reference tied to the first image, from the rank (x) of the row and from the rank (y) of the column containing the coefficient corresponding respectively to each target and to the image background, in the inverse transformed matrix of the phase correlation matrix; characterized in that in order to determine areas of pixels corresponding to each target and to associate them with a velocity vector it consists furthermore in:
   - adjusting the background of the first image with respect to the background of the second image, as a function of the translation vector estimated for the background;
   - calculating the absolute values of the differences in luminance between the first image, whose background has been adjusted, and the second image, these values of differences in luminance constituting an image termed the difference image;

- comparing the absolute values of the differences in luminance with respect to a predetermined threshold value; each pixel having, in absolute value, a luminance difference greater than the threshold value, being considered as being a pixel in motion;
- allocating each pixel in motion to an area consisting of pixels which are in motion and which are adjoining;
- calculating a velocity vector for each area, by calculating a vector of translation for this area, from a first to a second difference image;
- calculating a velocity vector for each target, as a function of the translation vector estimated for this target and as a function of the translation vector estimated for the image background;
- concluding that an area belongs to a target when its velocity vector coincides with the velocity vector of a target.

2. Process according to Claim 1, characterized in that, to eliminate false target detections, it furthermore consists in checking whether the modulus of the velocity vector of each area is less than a fixed threshold value for a duration corresponding to a fixed number of images.

3. Device for estimating the motion of at least one target within a string of images, for the implementation of the process according to Claim 1, including:
- means for sampling each image and representing each sample by the value of its luminance;
- means (2, 12) for calculating, for each image, a matrix of transformed coefficients through two-dimensional discrete Fourier transformation;
- means (18) for calculating a so-called phase correlation matrix, each coefficient of which is equal to the product of a transformed coefficient of a first image times the conjugate of a counterpart transformed coefficient of a second image, divided by the square of the modulus of this product;
- means (19) for calculating a matrix, termed the inverse transformed matrix of the phase correlation matrix, by applying the inverse Fourier transformation to the phase correlation matrix;
- means (20) for comparing, with respect to a predetermined threshold value, the moduli of the coefficients of the inverse transformed matrix of the phase correlation matrix and for searching for the one having the largest modulus, the latter coefficient corresponding to a translation of the image background, whereas the other coefficients having a modulus greater than the threshold value correspond to possible targets;
- means (21) for estimating a translation vector for each possible target and a translation vector for the image background, in a frame of reference tied to the first image, from the rank (x) of the row and from the rank (y) of the column containing the coefficient corresponding respectively to each possible target and to the image background, in the inverse transformed matrix of the phase correlation matrix;

the said device being characterized in that in order to determine areas of pixels corresponding to each target and to associate them with a velocity vector it consists furthermore in:
- means (14, 17) for adjusting the background of the first image with respect to the background of the second image, as a function of the translation vector estimated for the background;
- means (15, 16) for calculating the absolute values of the differences in luminance between the first image, whose background has been adjusted, and the second image, these values of differences constituting an image termed the difference image;
- means (22) for: comparing the absolute values of the differences in luminance with respect to a predetermined threshold value; each pixel which has, in absolute value, a luminance difference greater than the threshold value, being considered as being in motion; allocating each pixel in motion to an area consisting of pixels which are in motion and which are adjoining, each area being capable of representing a target;
- means (23) for confirming each area which actually belongs to a target, by:
  -- calculating a velocity vector for each area, by estimating a vector of translation for this area, from a first to a second difference image;
  -- calculating the modulus of the velocity vector for each possible target, from the translation vector of this possible target and from the translation vector of the background, which are estimated from the inverse transformed matrix;
  -- concluding that an area actually belongs to a target if the modulus of the velocity vector estimated for this area coincides with the modulus of the velocity vector estimated for a possible target.

FIG.1

FIG.2

FIG.3

FIG.4